# EUROPEAN PATENT SPECIFICATION

(11) **EP 1 114 713 B1**
(45) Date of publication and mention of the grant of the patent: **02.02.2005**
(21) Application number: 00917430.1
(22) Date of filing: 24.04.2000
(51) Int. Cl.: B29C 59/04, B29C 41/38, B29C 41/12, B44C 1/165, B32B 3/30

(54) **SHAPED SHEET AND METHOD FOR PRODUCING THE SAME**
GEFORMTE FOLIE UND VERFAHREN ZU DEREN HERSTELLUNG
FEUILLE MOULEE ET SON PROCEDE DE PRODUCTION

(30) Priority: 23.04.1999 JP 11574399
(43) Date of publication of application: 11.07.2001
(73) Proprietor: DAI NIPPON PRINTING CO., LTD., Tokyo 162-8001 (JP)
(72) Inventor: KUBOTA, Takeshi, Dai Nippon Printing Co., Ltd., Shinjuku-ku, Tokyo-to 162-8001 (JP)
(74) Representative: Smart, Peter John
(86) International application number: PCT/JP2000/002656
(87) International publication number: WO 2000/064660

(56) References cited:
- EP-A- 0 397 425
- WO-A-91/05660
- JP-A- 4 089 300
- JP-A- 4 314 523
- US-A- 4 352 847
- US-A- 5 707 478
- US-A- 5 855 717

## Description

### [Technical Field]

The present invention relates to a shaped sheet used to produce a resin coating of a synthetic resin by casting, particularly a composite shaped sheet used in a step of providing artificial leather with an irregular shape when the artificial leather is manufactured, and to a method of producing such a shaped sheet.

### [Background Art]

In a conventional method of production of artificial leather, a releasing sheet or a shaped sheet is used to form a resin coating from a synthetic resin solution by casting and thereafter the resin coating is laminated on to a ground fabric. In the casting method, a solution or molten composition comprising a natural or synthetic resin having qualities similar to an artificial leather is applied to a releasable resin layer of a shaped sheet to form a uniform resin coating. Next, the resin coating is laminated on to the ground fabric by preparing an adhesive layer. After that, the adhesive layer is dried or cured to the extent that there is no hindrance to successive processing and then the shaped sheet is peeled off and removed. Further, a pattern layer is directly printed on to the surface of the aforementioned resin coating or formed by transfer printing to provide a leather pattern or an abstract pattern. Surface treatment is performed using a transparent coloured or non-coloured paint to prevent the loss of printing ink and to regulate the surface glossiness.

In the aforementioned surface decorative method, a colorful surface is obtained but the surface has a flat feel. A three-dimensional leather like appearance which has a high design value cannot be obtained by this method. Instead, a shaped sheet having an irregular shape is formed by embossing a releasable resin layer of the releasing sheet to form thick and thin parts of the resin coating thereby providing a three-dimensional feeling and colour shading by varied thickness of the coloured resin coating.

In the production of a releasing sheet with a transfer pattern (a shaped sheet) a negative pattern is formed on a releasable resin layer which is made up of a thermoplastic resin and formed on a substrate sheet by embossing using an embossing roll corresponding to a positive plate having the irregularity of leather.

To form this irregular shape, the releasable resin layer is melted by heating and embossed using the embossing roll to form the desired irregular shape. In order to reproduce the pattern of the embossing roll fairly,it is necessary to melt the releasable resin layer by sufficient heating and to perform the transfer of the pattern of the embossing roll and cooling exactly. Therefore, this conventional method needs time for uniform heating, pressure to insert the embossing roll for embossing and time for cooling. This results in remarkably low productivity and it is difficult to reproduce the pattern of the embossing roll fairly and stably.

US-A-5855717 discloses a polymeric film with a surface structure which can be transferred to an article. The deformations of the surface preferably rise about 0.01 to 15.0 µm.

US-A-4352847 discloses a resin transfer film for use in photocopiers. The film has a surface roughness of at least 1 µm.

US-A-5707478 discloses a resin sheet smoothed with a metal roll having a surface roughness of 3 µm or less. This sheet may be laminated to another sheet.

### [Summary of the Invention]

In order to solve the above problem, it is an object of the present invention to provide a shaped sheet in which a predetermined pattern is fairly reproduced in the embossing processing of the shaped sheet and also to provide a production method superior in productivity.

Accordingly, the present invention provides in a first aspect a shaped sheet for forming a resin coating with a peak-and-trough pattern by casting from a solution of a reactive or thermoplastic resin or a thermally molten composition, comprising:
a substrate sheet; and
a releasable resin layer with a peak-and-trough pattern formed on one side of the substrate sheet,
wherein top portions of the peaks and bottom portions of the troughs are flat and have a fine irregular surface having an arithmetic average roughness Ra of 1.5 to 30.0 µm.

In the invention, the shaped sheet may be provided with a fine irregular surface having a maximum height Ry of 10.0 to 100.0 µm by the peak-and trough pattern.

In a second aspect, the present invention provides a method of producing such a shaped sheet, the method comprising:
forming a releasing sheet comprising a releasable resin layer with a fine irregular surface with an arithmetic average roughness Ra of 0.3 to 2.0 µm on a substrate sheet; and then
embossing the releasing sheet so as to form a peak-and-trough pattern on the releasable resin layer wherein top portions of the peaks and bottom portions of the troughs are flat and have a fine irregular surface having an arithmetic average roughness Ra of 1.5 to 30.0 µm.

The method of the invention comprises forming a fine irregular surface on a releasable resin of the releasing sheet and performing embossing processing to transfer the irregular pattern of the embossing roll. For this reason, the convex portion of the embossing roll is inserted deeply into the releasable resin and thus the method forms a shaped sheet having a fine irregular surface in which the shape of the concave portion of the embossing roll is well reproduced in the fine irregular surface.

### [Brief description of the Drawings]

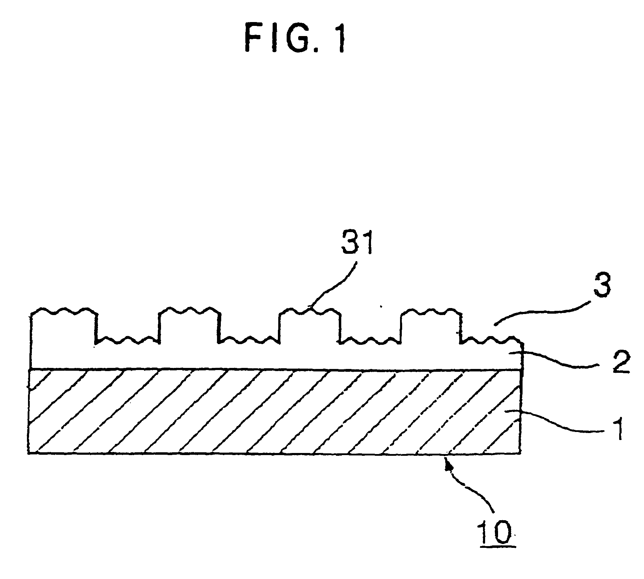

FIG. 1 is a diagrammatic view showing a section of a shaped sheet according to the present invention.

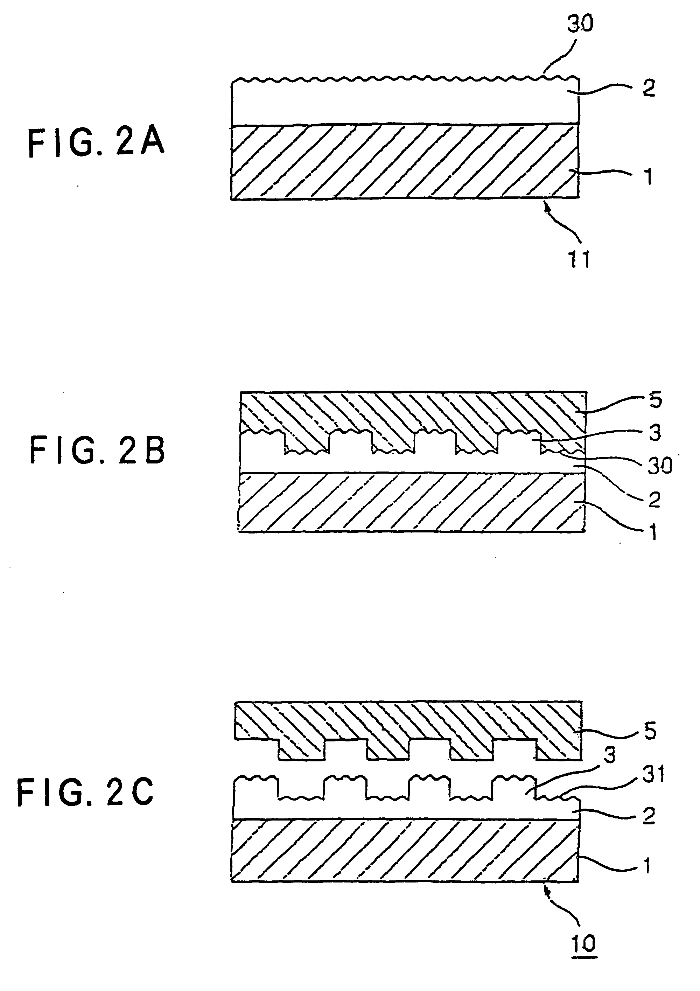

FIG. 2(A) is a sectional view of a releasing sheet showing the state of a shaped sheet according to the present invention prior to embossing processing, FIG. 2(B) is a diagrammatic view of a section showing a shaped sheet according to the present invention when subjected to embossing processing, and FIG. 2(C) is a diagrammatic view showing a section of a completed shaped sheet according to the present invention.

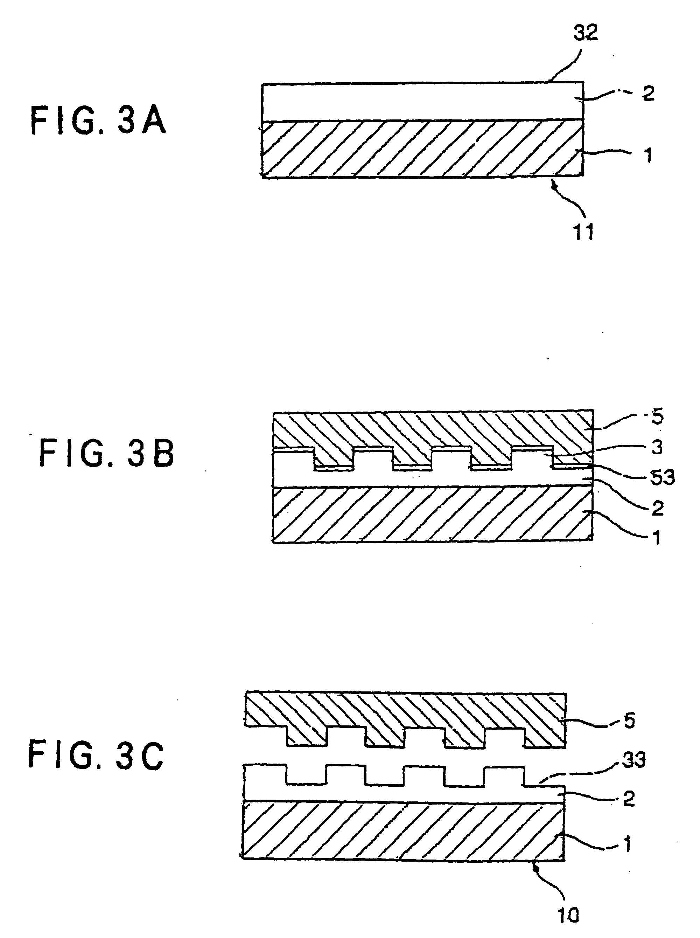

FIG. 3(A) is a schematically sectional view of a releasing sheet for producing a shaped sheet according to a conventional method, FIG. 3(B) is a diagrammatic view of a section showing a shaped sheet when subjected to embossing processing according to the conventional method, and FIG. 3(C) is a diagrammatic view showing the section of a completed shaped sheet according to the conventional method.

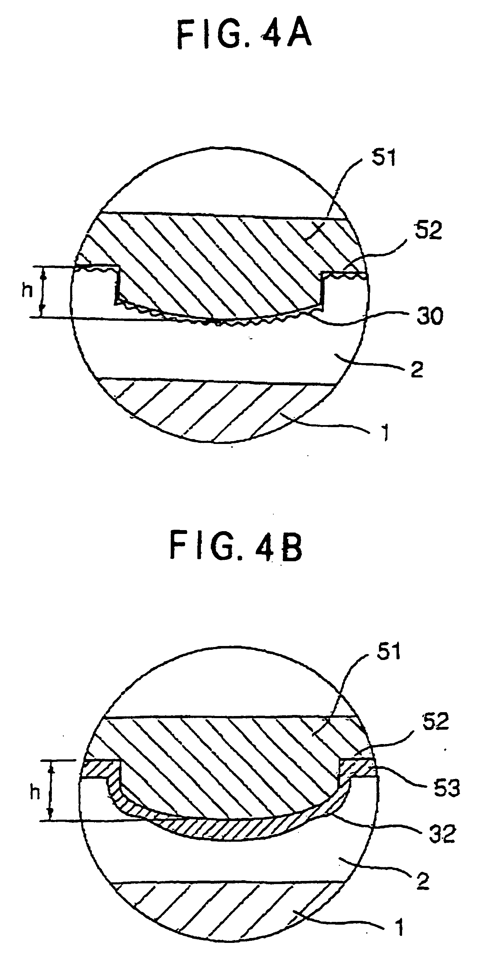

FIG. 4(A) is a diagrammatic view showing embossing using an embossing roll in the present invention, and FIG. 4(B) is a diagrammatic view showing embossing using an embossing roll in a conventional method.

### [Preferred Embodiments of the Invention]

A shaped sheet according to the present invention is, as shown in FIG. 1, a shaped sheet 10 which is provided with a releasable resin layer having a peak-and-trough pattern 3 formed on one side of a substrate sheet 1. The shaped sheet may be used to form a resin coating with a peak-and-trough pattern by casting from a solution of a reactive or thermoplastic resin or a thermally molten composition. Top portions of the peaks and bottom portions of the troughs are flat and have a fine irregular surface 31 having an arithmetic average roughness Ra of 1.5 to 30.0 µm.

The shaped sheet 10 may be provided with a fine irregular surface having a maximum height Ry of 10.0 to 100.0 µm by the peak-and-trough pattern.

Also, as shown in FIG. 2(C), the present invention relates to a method of producing the shaped sheet 10, the method comprising forming a releasing sheet 11 in which the releasable resin layer 2 of the substrate sheet 1 has a fine irregular surface 30 with an arithmetic average roughness Ra of 0.3 to 2.0 µm as shown in 2(A), and then embossing the releasing sheet to form an irregular shape on the releasable resin layer 2 as shown in FIG. 2(B) so as to form a peak-and-trough pattern on the releasable resin layer wherein top portions of the peaks and bottom portions of the troughs are flat and have an arithmetic average roughness Ra of 1.5 to 30.0 µm as shown in FIG. 2(C).

The substrate sheet used for the shaped sheet of the present invention may be selected from sheet-like materials which have low thickness variation and which are free from melt-cutting and deformation (for example elongation or contraction) caused by heat or solvents during the steps of forming the releasable resin layer, embossing and forming artificial leather by application.

Examples of the substrate sheet include papers such as unbleached kraft paper, unglazed kraft paper, machine glazed kraft paper, simili paper and wood free paper and nonwoven fabric constituted of polyester, rayon or the like.

Substrate sheets having a basis weight of 30 to 300 g/m² are preferable.

When a releasable solution or a dispersion type material is applied to form the releasable resin layer, it is desirable to provide a filling layer on the surface of paper to prevent penetration of coating solution. For the filling layer, a resin latex containing a filler such as calcium carbonate, barium sulfate, silica or clay is applied in an amount of 5 to 30 g/m² (solid content). The surface of the layer may be made smooth by calendering if necessary. Also, a thermoplastic resin such as a polyolefin may be applied by melting extrusion coating to form the filling layer.

The releasable resin layer of the present invention is selected from materials which have releasability even after an artificial leather material is applied to form a film and which enable a transfer pattern to be maintained even if heat is applied during processing.

Examples of these materials include thermoplastic resins such as polypropylene, high density polyethylene, silicone resin and polymethylpentene and also include materials, which are non-adhesive at ambient temperature and are cured by applying energy thereto after embossing, such as resins which are cured by ionizing radiation rays such as ultraviolet rays or electron rays and thermosetting resins such as alkyd resins in which a solid resin is blended.

When the releasable resin layer is formed using a thermoplastic resin, it is formed by heating and melting extrusion coating in the case where the resin consists of 100% of a solid. Where the resin is a solution or dispersion the resin layer is formed by a standard coating system such as gravure coating, roll coating, bar coating or air knife coating. Also, the releasable resin layer is structured by laminating a film, which is produced in a separate step and made of a releasable resin, either through the provision of an adhesive layer or by sandwich lamination through a heat meltable resin.

When the releasable resin layer is a thermoplastic resin applied to the substrate sheet by melting extrusion coating or formed by a T-dice method the fine irregular surface to be formed on the releasable resin layer used in the present invention may be embossed by a cooling roll. Then, the arithmetic average roughness Ra of the fine irregular surface 30 shown in FIG. 2(A) is from 0.3 to 2.0 µm. When the roughness is larger than 2.0 µm, the fine irregular surface 30 is insufficiently pressed when the transfer pattern 3 is formed by the embossing roll 5 and the fine irregular surface 31 formed on the surface of the shaped sheet 10 is thereby increased in roughness as shown in FIG. 2(B). Therefore, the glossiness of synthetic resin leather formed by casting is too low.

On the other hand, when the roughness is smaller than 0.3 µm, the fine irregular surface is close to being a smooth surface 32 shown in FIG. 3(A). Furthermore, even if stronger pressure is applied such that the convex portion 51 of the embossing roll reaches the releasable resin layer 2 completely as shown in FIG. 4(B) when the peak-and-trough pattern 3 is pressed by the embossing roll 5, a non-embossed portion 53 is produced where the embossing roll is not in contact with the releasable resin because of the intervention of gas between the convex portion 51 of the embossing roll and the releasable resin layer 2. As a result, in the peak-and-trough pattern 3 of the shaped sheet 10, sufficient depth cannot be attained. Therefore, the depth of the concave portion of an artificial leather formed by casting using such a shaped sheet is insufficient and uneven.

When a releasing sheet having an arithmetic average roughness Ra of 0.3 to 2.0 µm is subjected to embossing, the bite of the embossing roll at the releasing sheet does not always depends on the height of the embossing. Specifically, those having a higher peak-and-trough pattern, that is, a larger pattern tend to have higher adaptability to embossing. A particularly high embossing effect is produced using a shaped sheet formed with fine irregular surface having a maximum height Ry of 10.0 to 10.0 µm according to the height of the embossing, namely the peak-and-trough pattern. When the maximum height of the transfer pattern is 10.0 µm or less, the difference in each of embossing height, unevenness and glossiness is small even if a releasing sheet having an arithmetic average roughness Ra of 0.3 µm or less is used. When the maximum height of the embossing pattern is 100.0 µm or more, the embossing roll bites strongly at the releasable resin layer, requiring a large force to peel off the releasable layer from the embossing roll. If embossing speed is not lowered, the operation cannot continue, resulting in reduced productivity.

As shown in FIG. 2(A), the peak-and-trough pattern 3 of the shaped sheet 10 of the present invention is formed on the surface of the releasable resin layer 2 of the releasing sheet 11 obtained by laminating the releasable resin layer 2 provided with a fine irregular surface 30 having an arithmetic average surface roughness Ra of 2.0 to 0.3 µm on to the substrate sheet 1. Specifically, a back-up paper roll (not shown) is disposed on the side of the substrate sheet 1 of the releasing sheet 11 such that the embossing roll 5 provided with the peak-and-trough pattern 3 is brought into contact with the releasable resin layer 2. Then, the side of the releasable resin layer 2 is heated to its melting point by using heating steam, a heating medium or an infrared heater. Cooling and molding operations are performed to carry out embossing while pressure is applied by a cooled embossing roll as shown in FIG. 2(B) to form the shaped sheet 10 provided with the peak-and trough pattern 3. At this time, the fine irregular surface 30 to be embossed is pressed by the embossing roll 5 and its flat portion is changed to the fine irregular surface 31 which is almost flat. A non-embossed portion as shown in FIG. 4(A) is not formed between the convex portion 51 of the embossing roll and the releasable resin layer. A peak-and-trough pattern 3 having a depth similar to that of a given peak-and-trough pattern can be structured.

On the surface of the peak-and-trough pattern 3 of the shaped sheet formed according to the present invention, a heat resistant resin varnish of a releasable composition (not shown), may be applied. In this case, the resin layer forming the peak-and-trough pattern surface need not be releasable from artificial leather compositions.

The material used for the resin layer may be rather selected according to its transferability and heat resistance. For instance, resins which have non-adhesive plasticity at room temperature and which are cured by ionizing radiation such as ultraviolet rays or electron rays, curable resins of epoxy resins or saturated polyesters/polyisocyanate type resins or thermoplastic resins such as saturated polyesters, polyethylene or polyimides may be used by applying any of these resins or by laminating a film of any such resin.

The aforementioned releasable resin varnish is preferably formed by application as a thin film layer with a thickness of the order of 0.2 to 2 µm. Examples of suitable materials include silicone, fluororesins, thermosetting resins such as aminoalkyd and ionizing radiation-curable resins prepared from a prepolymer, oligomer and/or monomer having a polymerizable unsaturated bond or an epoxy group.

To apply the releasable composition, the composition is diluted by solvent as required so that it has a viscosity as low as possible. The composition is applied uniformly so as to extend to the concave portion of the shaped sheet by a coating method such as gravure or roll coating (direct or reverse), air knife coating, curtain coating or bar coating. Heat or ionizing radiation is applied in accordance with the properties of the coating solution to cure the solution and modify the releasability of the irregular surface and heat resistance.

Also, it is desirable to perform corona discharge treatment on the coating surface provided with an irregular pattern to allow the coating surface to adhere to the releasable resin varnish firmly and stably.

Ra (arithmetic average roughness) and Ry (maximum height) used in the present invention were measured by the following measuring method.

### (Measuring method)

Measurements were made based on Japanese Industrial Standards (JIS B 0601-1994) [Surface roughness-Definition and Indication]. International Standards corresponding to this Japanese Standards are shown below.
- ISO 468-1982 (Surface roughness - Parameters, their values and general rules for specifying requirements)
- ISO 3274-1975 (Instruments for the measurement of surface roughness by the profile method - Contact (stylus) instruments of consecutive profile transformation - Contact profile meters, system M)
- ISO 4287/1-1984 (Surface roughness - Terminology Part 1: Surface and its parameters)
- ISO 4287/2-1984 (Surface roughness - Terminology Part 2: Measurement of surface roughness parameters)
- ISO 4288-1985 (Rules and procedures for the measurement of surface roughness using stylus instruments)

### (Measuring condition)

Radius of the tip the tracer: 5 µm
Load: 4 mN
Cutoff value: Standard values set out in Table 1 were selected.
Standard length: Standard values set out in Table 2 were selected.

Measuring instruments: surface roughness measuring device Suftest-201 manufactured by Mitsutoyo

**[Table 1]**

| Range of Ra (µm) | | Cutoff value λc (mm) | Evaluated length 1n (mm) |
|---|---|---|---|
| Exceeding | Less than | | |
| (0.006) | 0.02 | 0.08 | 0.4 |
| 0.02 | 0.1 | 0.25 | 1.25 |
| 0.1 | 2.0 | 0.8 | 4 |
| 2.0 | 10.0 | 2.5 | 12.5 |
| 10.0 | 80.0 | 8 | 40 |
| Numerals in ( ) are reference values | | | |

**[Table 2]**

| Range of Ry (µm) | | Standard length 1 (mm) | Evaluated length 1n (mm) |
|---|---|---|---|
| Exceeding | Less than | | |
| (0.025) | 0.10 | 0.08 | 0.4 |
| 0.10 | 0.50 | 0.25 | 1.25 |
| 0.50 | 10.0 | 0.8 | 4 |
| 10.0 | 50.0 | 2.5 | 12.5 |
| 50.0 | 200.0 | 8 | 40 |
| Numerals in ( ) are reference values | | | |

### [EXAMPLES]

The present invention will be hereinafter explained in more detail by way of examples.

### (Example)

A polypropylene (releasable resin 2) was applied on one surface of a simili paper (substrate sheet 1) weighing 52 g/m² at a thickness of 30 µm using a T-die melting extrusion coater provided with a cooling roll having an irregular pattern with an arithmetic average roughness Ra of 1 µm to produce a releasing sheet 11 having a fine irregular surface 30 shown in FIG. 2(A). The fine irregular surface at this time had an arithmetic average roughness of 0.7 µm, a cutoff value of 0.8 mm and an evaluated length of 4 mm.

Next, a paper roll and an embossing roll with a convex portion 51 having a height of h were placed on an embossing machine. The above releasing sheet 11 was preheated to 120°C and the embossing roll 5 cooled to 10°C was used to transfer the pattern under cooling at a pressure of 60 kg/cm² as shown in FIG. 2(B) thereby producing a shaped sheet 10 having a peak-and-trough pattern 3. The fine irregular surface 31 of the shaped sheet 10 as shown in FIG. 2(C) was formed by bringing the sheet into contact with the convex portion of a master roll as shown in FIG. 4(A). The surface condition of the fine irregular surface 31 was as follows: arithmetic average roughness: 0.1 µm, cutoff value: 0.25 mm and evaluated length: 1.25 mm. The depth in the surface condition of the peak-and-trough pattern 3 almost corresponded to the convex portion 51 having a height of 50 µm formed on the embossing roll 5. Also, the maximum height was 45 µm, the standard length was 0.25 mm and the evaluated length was 1.25 mm.

### (Comparative Example 1)

A polypropylene (releasable resin 2) was applied on one surface of a simili paper (substrate sheet 1) weighing 52 g/m² in a thickness of 30 µm by using a T-die melting extrusion coater provided with a cooling roll having an irregular pattern with an arithmetic average roughness Ra of 0.3 µm to produce a releasing sheet 11 having a smooth surface 32 shown in FIG. 3(A). The fine irregular surface corresponding to the smooth surface at this time had an arithmetic average roughness of 0.2 µm, a cutoff value of 0.8 mm and an evaluated length of 4 mm.

Next, the above releasing sheet 11 was placed on an embossing machine provided with a paper roll and a master plate 5 and was preheated to 120°C. An embossing roll cooled to 10 was used to transfer the pattern under cooling at the same pressure as in Example 1 as shown in FIG. 2(B) thereby forming a peak-and-trough pattern 3 shown in 2(C).

However, the convex portion 51 of the embossing roll could not be inserted sufficiently as shown in FIG. 3(B) or FIG. 4(B), so that a non-embossed portion 53 was produced. For this reason, a pressure 1.7 times that of Example 1 was applied so that the concave portion 52 of the embossing roll was perfectly brought into contact with the releasing sheet 11 to form a shaped sheet 10 as a comparative example.

The surface condition of the aforementioned transfer irregular surface 33 of the shaped sheet 10 was as follows: arithmetic average roughness: 0.1 µm, cutoff value: 0.25 mm and evaluated length: 1.25 mm. This surface condition was not very different from that of the smooth surface 32 of the releasing sheet.

The depth in the surface condition of the transfer pattern 3 corresponded to 0.6 times the height, namely 50 µm, of the convex portion 51 formed on the embossing roll 5. Also, the maximum height was 30 µm, the standard length was 0.25 mm and the evaluated length was 12.5 mm showing that the embossing pattern was not transferred sufficiently.

### (Comparative Example 2)

A polypropylene (releasable resin 2) having a thickness of 30 µm was applied on one surface of a simili paper (substrate sheet 1) weighing 52 g/m² by using a T-die melting extrusion coater (not shown) provided with a cooling roll having an irregular pattern with an arithmetic average roughness Ra of 3 µm to produce a releasing sheet 11. The fine irregular surface at this time had an arithmetic average roughness of 2.2 µm, a cutoff value of 2.5 mm and an evaluated length of 12.4 mm.

Next, the above releasing sheet 11 was subjected to embossing as in Example 1 to form a peak-and-trough pattern.

The surface condition of the aforementioned transfer irregular surface 33 of the shaped sheet 10 was as follows: arithmetic average roughness: 0.1 µm, cutoff value: 0.25 mm and evaluated length: 1.25 mm. This surface condition was not very different from that of the fine irregular surface of the releasing sheet. However, the maximum roughness was larger than that of Example 1 and the surface exhibited an uneven condition. Also, the depth in the surface condition of the transfer pattern 3 almost corresponded to the convex portion 51 having a height of 50 µm which was formed on the embossing roll 5. Also, the maximum height was 45 µm, the standard length was 0.25 mm and the evaluated length was 1.25 mm.

Using these shaped sheets prepared in Examples and Comparative Examples, a colored polyurethane paint was applied to each of these sheets in an amount of 80 g/m² (solid content) by using a knife coater with a clearance set to 250 µm. After the paint was dried, the sheet was laminated on a white fabric to obtain an artificial leather having an irregular pattern. The results of evaluation of the surface condition of the formed artificial leather by visual observation are as shown in Table 3.

**[Table 3]**

| Sample | Example 1 | Comparative Example 1 | Comparative Example 2 |
|---|---|---|---|
| Depth of irregularity | Good | Shallow | Good |
| Unevenness of the surface | Good | Exist slightly | Generation of unevenness |
| Glossiness of the surface | Good | Good | Deficient glossiness |

## Claims

1. A shaped sheet (10) for forming a resin coating-with a peak-and-trough pattern by casting from a solution of a reactive or thermoplastic resin or a thermally molten composition, comprising:
a substrate sheet (1); and
a releasable resin layer (2) with a peak-and-trough pattern (3) formed on one side of the substrate sheet, wherein top portions of the peaks and bottom portions of the troughs are flat and have a fine irregular surface (30) having an arithmetic average roughness Ra of 1.5 to 30.0 µm.

2. A shaped sheet (10) as claimed in Claim 1, wherein the shaped sheet is provided with a fine irregular surface 30) having a maximum height Ry of 10.0 to 100.0 µm by the peak-and-trough pattern.

3. A method of producing a shaped sheet as claimed in Claim 1, the method comprising:
forming a releasing sheet comprising a releasable resin layer (2) with a fine irregular surface with an arithmetic average roughness Ra of 0.3 to 2.0 µm on a substrate sheet (1); and then
embossing the releasing sheet so as to form a peak-and-trough pattern (3) on the releasable resin layer wherein top portions of the peaks and bottom portions of the troughs are flat and have a fine irregular surface (30) having an arithmetic average roughness Ra of 1.5 to 30.0 µm.

## Patentansprüche

1. Geformte Folie (10) zum Ausbilden einer Harzbeschichtung mit einem Berg-und-Tal-Muster durch Gießen aus einer Lösung aus einem reaktiven oder thermoplastischen Harz oder einer thermisch geschmolzenen Zusammensetzung, mit:
einer Substratfolie (1); und
einer lösbaren Harzschicht (2) mit einem Berg-und-Tal-Muster (3), ausgebildet auf einer Seite der Substratfolie, wobei obere Abschnitte der Berge und untere Abschnitte der Täler flach sind und eine feine unregelmäßige Oberfläche (30) mit einer arithmetischen durchschnittlichen Rauhigkeit Ra von 1,5 bis 30,0 *µ*m haben.

2. Geformte Folie (10) nach Anspruch 1, wobei die geformte Folie mit einer feinen unregelmäßigen Oberfläche (30) versehen ist, die eine maximale Höhe Ry von 10,0 bis 100,0 *µ*m durch das Berg-und-Tal-Muster aufweist.

3. Verfahren zur Herstellung einer geformten Folie nach Anspruch 1, wobei das Verfahren umfasst:
die Ausbildung einer ablösenden Folie, die eine ablösbare Harzschicht (2) umfasst, mit einer feinen unregelmäßigen Oberfläche mit einer arithmetischen durchschnittlichen Rauhigkeit Ra von 0,3 bis 2,0 µm auf einer Substratfolie (1); und dann
das Prägen der ablösenden Folie, um so ein Berg-und-Tal-Muster (3) auf der ablösbaren Harzschicht auszubilden, wobei obere Abschnitte der Berge und untere Abschnitte der Täler flach sind und eine feine unregelmäßige Oberfläche (30) mit einer arithmetischen durchschnittlichen Rauhigkeit Ra von 1,5 bis 30,0 µm haben.

## Revendications

1. Feuille façonnée (10) destinée à former un revêtement de résine avec un motif de pics et de creux par coulage à partir d'une solution d'une résine réactive ou thermoplastique ou d'une composition thermiquement fondue, comprenant :
une feuille de substrat (1) ;
une couche de résine libérable (2) avec un motif de pics et de creux (3) formé sur un côté de la feuille de substrat, dans laquelle les parties supérieures des pics et les parties inférieures des creux sont plates et ont une surface irrégulière fine (30) ayant une rugosité moyenne arithmétique Ra de 1,5 à 30,0 µm.

2. Feuille façonnée (10) selon la revendication 1, dans laquelle la feuille façonnée est pourvue d'une surface irrégulière fine (30) ayant une hauteur maximale Ry de 10,0 à 100,0 µm par le motif de pics et de creux.

3. Procédé de production d'une feuille façonnée telle que revendiquée dans la revendication 1, le procédé comprenant les étapes consistant à :
former une feuille de libération comprenant une couche de résine libérable (2) avec une surface irrégulière fine avec une rugosité moyenne arithmétique Ra de 0,3 à 2,0 µm sur une feuille de substrat (1) ; et
bosseler la feuille de libération de façon à former un motif de pics et de creux (3) sur la couche de résine libérable dans lequel les parties supérieures des pics et les parties inférieures des creux sont plates et ont une surface irrégulière fine (30) ayant une rugosité moyenne arithmétique Ra de 1,5 à 30,0 µm.
